# EUROPEAN PATENT APPLICATION

(11) **EP 4 838 860 A1**
(43) Date of publication of application: **11.11.2026**
(21) Application number: 26176128.2
(22) Date of filing: 01.05.2026
(51) Int. Cl.: H04L 47/24, H04L 47/2441, H04L 47/2491

(54) **QOS-BASED RESOURCE SCHEDULING IN MESH NETWORK**

(30) Priority: 09.05.2025 US 202519204437
(71) Applicant: TP-Link Systems Inc., Irvine, California 92618 (US)
(72) Inventor: Zhu, Haiming, Shanghai, 201799 (CN); Jiang, Kainan, Shanghai, 201799 (CN)
(74) Representative: Marks & Clerk LLP

(57) **Abstract**

This present disclosure provides a method and device for QoS-based resource scheduling in a Mesh network. The method for a first node in the Mesh network includes: identifying traffic priority information of an incoming traffic to the Mesh network, the traffic priority information including a traffic priority level of the incoming traffic; and providing the identified traffic priority information to a second node in the Mesh network, such that the second node is able to perform QoS-based resource scheduling at least based on the traffic priority information from the first node.

## Description

### CROSS REFERENCE TO RELATED APPLICATIONS

This application claims the benefit of U.S. Non-Provisional Patent Application No. 19/204,437, filed on May 09, 2025 and titled "QOS-BASED RESOURCE SCHEDULING

### IN MESH NETWORK".

### TECHNICAL FIELD

The present disclosure relates to wireless communications, and more specifically, to methods and nodes for QoS-based resource scheduling in a Mesh network.

### BACKGROUND

With the widespread application of Mesh networks in home, industrial, and public networks, the optimization of network resource allocation and traffic scheduling becomes important. Quality of Service (QoS) optimization has been raised by resource scheduling based on the traffic priority. However, existing technologies are limited to optimizing QoS strategies at a single node or device such as the gateway in the Mesh network.

### SUMMARY

In view of this, the present disclosure provides improved methods and nodes for Quality of Service (QoS)-based resource scheduling in a Mesh network, with collaborative optimization by multiple nodes in the Mesh network.

In an aspect of the present disclosure, the present disclosure provides a QoS-based resource scheduling method for a first node in a Mesh network. The method may include: identifying traffic priority information of an incoming traffic to the Mesh network, wherein the traffic priority information comprises a traffic priority level of the incoming traffic; and providing the identified traffic priority information to a second node in the Mesh network, such that the second node is able to perform QoS-based resource scheduling at least based on the traffic priority information from the first node.

In another aspect of the present disclosure, the present disclosure provides a method for a QoS-based resource scheduling method for a second node in a Mesh network. The method may include: obtaining traffic priority information of an incoming traffic to the Mesh network from a first node in the Mesh network, wherein the traffic priority information comprises a traffic priority level of the incoming traffic; and performing QoS-based resource scheduling at least based on the traffic priority information.

In yet another aspect of the present disclosure, the present disclosure provides a first node in a Mesh network. The first node may include one or more processors; a memory coupled to at least one of the processors; and a set of computer program instructions stored in the memory. When executed by at least one of the processors, cause the first node to perform operations of: identifying traffic priority information of an incoming traffic to the Mesh network, wherein the traffic priority information comprises a traffic priority level of the incoming traffic; and providing the identified traffic priority information to a second node in the Mesh network, such that the second node is able to perform QoS-based resource scheduling at least based on the traffic priority information from the first node.

In yet another aspect of the present disclosure, the present disclosure provides a second node in a Mesh network. The second node may include one or more processors; a memory coupled to at least one of the processors; and a set of computer program instructions stored in the memory. When executed by at least one of the processors, cause the second node to perform operations of: obtaining traffic priority information of an incoming traffic to the Mesh network from a first node in the Mesh network, wherein the traffic priority information comprises a traffic priority level of the incoming traffic; and performing QoS-based resource scheduling at least based on the traffic priority information.

It should be noted that general or specific embodiments herein may be implemented as a system, a method, an integrated circuit, a computer program, a computer-readable medium, or any selective combination thereof.

### BRIEF DESCRIPTION OF DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps or elements.
Fig. 1 shows an exemplary architecture of a Mesh network 100;
Fig. 2 shows a conventional QoS-based resource scheduling process 200 in a Mesh network;
Fig. 3 shows an exemplary application scenario with an architecture of a Mesh network 300 according to an embodiment of the present disclosure;
Fig. 4 shows an exemplary QoS strategy determination process 400 in a Mesh network, according to an embodiment of the present disclosure;
Fig. 5 shows a flowchart of a method 500 for QoS-based resource scheduling implemented at a first node in a Mesh network according to an embodiment of the present disclosure;
Fig. 6 shows a flowchart of a method 600 for QoS-based resource scheduling in a Mesh network implemented at a second node according to an embodiment of the present disclosure;
Fig. 7 is an exemplary block diagram illustrating a device 700 in accordance with some embodiments of the present disclosure.

### DETAILED DESCRIPTION

The following detailed description refers to the accompanying drawings. While several illustrative embodiments are described herein, modifications, adaptations and other implementations are possible. For example, substitutions, additions, or modifications may be made to the components and steps illustrated in the drawings, and the illustrative methods described herein may be modified by substituting, reordering, removing, or adding steps to the disclosed methods. Accordingly, the following detailed description is not limited to the disclosed embodiments and examples. Instead, the proper scope of the invention is defined by the appended claims.

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "receiving", "transmitting", "transferring", "requesting", "forwarding", "authorizing", "establishing", "enabling", "sending" or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second" etc., to describe a common object, merely indicate that different instances of like objects are being referred to, and are not intended to imply that the objects so described must be in a given sequence, either temporally, spatially, in ranking, or in any other manner. Likewise, articles such as "a", "an" or "the" do not represent a quantity limit, but represent an existence of at least one. Words such as "connect" and "link" are not limited to physical or mechanical connections, but may include electrical connections, whether direct or indirect.

In addition, technical features involved in different embodiments of the present disclosure described below may be combined with each other as long as no conflicts occurs therebetween.

As mentioned in the above, existing technologies are limited to optimizing QoS strategies at a single node or device such as the gateway in a Mesh network, without considering the collaborative optimization by multiple nodes in the Mesh network. This limitation restricts the overall performance of the network. Therefore, there is a need for an improved QoS-based resource scheduling by multiple nodes in the Mesh networks, such that traffic within the entire network is optimally scheduled and resources of the overall network are more reasonably utilized.

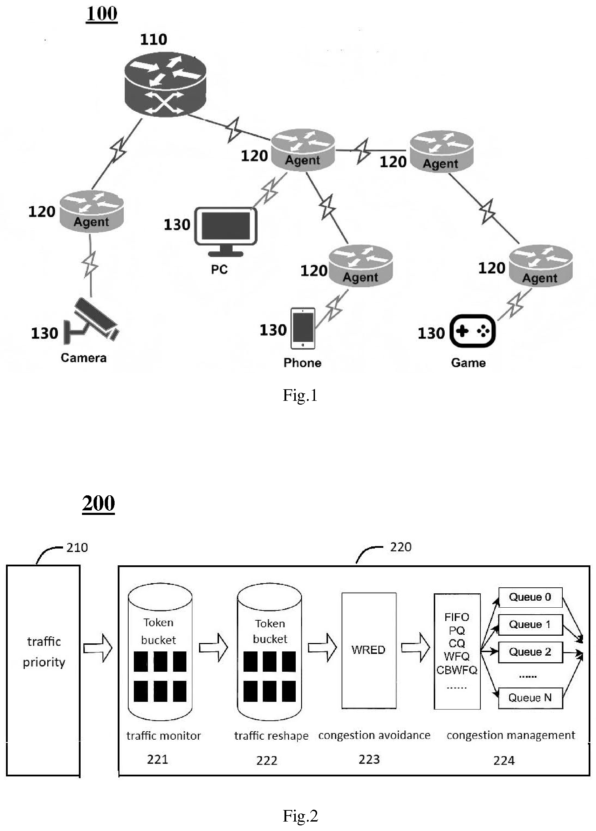

Fig. 1 shows an exemplary architecture of a Mesh network 100.

As shown in Fig. 1, the Mesh network 100 may include at least one gateway node 110, multiple agent nodes 120 and various terminal devices 130. These nodes and devices 110-130 may be connected with each other in a wireless or wired manner.

The gateway node 110 may serve as a bridge connecting the Mesh network to external networks such as the Internet. The gateway node 110 may perform communication between the Mesh network and the external network. For example, the gateway node 110 may receive data from nodes 120 within the Mesh network 100 and forward it to an external network, and may receive data from the external network and distribute it to the nodes 120 within the Mesh network 100.

Further, the Mesh network, especially a large-scale Mesh network, may include multiple regions (or referred as sub-networks), and each region includes at least one gateway node. In addition to communicating data between the Mesh network and the external network, the gateway node in one region may also serves as a bridge connecting one region with other regions.

The agent nodes 120 may serve for communicating data with the terminal devices. For example, the agent nodes may be access points (APs) of a WiFi network (no shown), or may be a router as shown in Fig. 1. The agent nodes 120 are interconnected with each other and connected to the gateway node 110, to form a mesh topology for facilitating communication. Through this mesh topology, the agent nodes may provide connectivity for terminal devices, allowing the terminal devices to access network resources and communicate with each other.

The Mesh network 100 can support a variety of terminal devices 130, such as mobile phones, computers, smart home appliances, and surveillance cameras, as depicted in Fig.1. These terminal devices may include cameras for surveillance, phones for communication, personal computers (PCs) for general computing, game consoles (Game) for entertainment, etc. For example, a smartwatch as a terminal device can be wirelessly connected to a nearby node for sending exercise data to a local server or uploading it to a cloud server.

The management and control of the Mesh Network may adopt a centralized control approach which is implemented by the gateway node 110. For example, the gateway node 110 may be configured with a centralized controller. In this case, the centralized controller may perform overall management, such as node configuration, routing strategy formulation, and traffic management, QoS strategy implementation at the gateway level. This centralized control approach is commonly applied in an enterprise Mesh network. Administrators can set access permissions and bandwidth allocation for terminal devices in different departments via the gateway node.

Additionally, the management and control of the Mesh network may also adopt a distributed control approach. In this case, the gateway node and the agent nodes jointly manage the network through negotiation and interaction. That is, each node participates in processes such as routing decisions and resource allocation without relying on a single node. This approach enhances the network's autonomy and resilience, and thus it is typically applied in large-scale outdoor Mesh networks.

Fig. 2 shows a conventional QoS-based resource scheduling process 200 in a Mesh network.

Currently, the QoS-based resource scheduling process 200 is performed at a gateway node, such as the gateway node 110 of Fig.1, in the Mesh network. The agent node typically does not perform QoS-based resource scheduling, or only performs a resource scheduling in consideration of the packet's source, as it lacks awareness of traffic priority information.

As shown in Fig. 2, at step 210, the gateway node may identify traffic priority information of a traffic.

For example, the gateway node may perform a comprehensive and in-depth analysis of the traffic traversing the network by employing a Deep Flow Inspection (DFI) technology, based on traffic content, source and destination addresses, protocol type, and/or application-layer details. Through this analysis, the traffic may be categorized as one of various types with respective traffic characteristics, such as VoIP, a video stream, and file downloading.

Subsequently, each type of traffic may be mapped to a specific priority level based on the traffic characteristics, such as time-sensitivity. For example, as a real-time communication service, VoIP may be mapped to a high priority level. A video stream with less time-sensitive may be mapped to a medium priority level, while file downloading may be allocated to a low priority level. Furthermore, the priority level may also be determined based on various requirements for the Mesh network. For example, for a Mesh network in a library, even though the file downloading is with a lower time-sensitivity, it may be mapped to a high priority level as an important service within the library.

Alternatively, the gateway node may apply an AI model to identify the traffic priority information. When a new traffic enters, the AI model may conduct feature extraction, type identification and priority determination to provide the traffic priority information for QoS-based resource scheduling.

At step 220, based on the identified traffic priority information, the gateway node may perform QoS-based resource scheduling with one or more QoS policies. As shown in Fig.2, the gateway node applies four QoS policies, including traffic monitoring 221, traffic reshaping 222, congestion avoidance 223 and congestion management 224.

As an example, the traffic monitoring 221 may adopt a CAR (Committed Access Rate) algorithm, which is based on the token bucket mechanism. The CAR algorithm limits a traffic rate through a token bucket while allowing a certain degree of burst traffic. The CAR algorithm mainly involves following parameters: (1) CIR (Committed Information Rate), which indicates an average traffic rate allowed by the Mesh network; (2) CBS (Committed Burst Size), which corresponds to the depth of the token bucket; and (3) EBS (Excess Burst Size), which is used to manage the allowed additional traffic bursts. Based on these parameters, the incoming traffic are classified into three types: (1) Compliant traffic, which meets the requirements of CIR and CBS; (2) Excess traffic, which exceeds the CIR but remains within the EBS range; (3) Discarded traffic, which exceeds both the CIR and EBS. Accordingly, different types of traffic are handled as follows: (1) the Compliant traffic is directly forwarded; (2) the Excess traffic is re-marked and then forwarded; (3) the Discarded traffic is discarded.

Alternatively, the token bucket may be replaced with a leaky bucket to cache short-term burst traffic as much as possible and avoid direct packet loss. Additionally, a multi-bucket mechanism may be adopted to achieve more refined control over different types of traffic.

As an example, the traffic reshaping 222 may adopt a GTS (Generic Traffic Shaping) algorithm, which is based on token bucket and queue management. The GTS limits the traffic transmission rate by delaying the transmission of certain data packets, thereby smoothing burst traffic, and preventing its impact of burst traffic on downstream nodes or devices. The GTS algorithm mainly involves the following parameters: (1) Bandwidth (bandwidth limit), which restricts the maximum transmission rate of a traffic (in bits per second, bps); (2) Buffer Size (buffer size), which sets the length of the queue used to temporarily store a traffic (in bytes or the number of data packets); and (3) Latency (latency threshold), which defines the maximum allowable delay of data packets in the queue. Based on these parameters, the incoming traffic is handled as follows: (1) if the current traffic rate exceeds the bandwidth limit but the buffer is not full, data packets are temporarily stored in the buffer and wait for a suitable time to be sent, such as when the latency threshold is reached; (2) if the traffic exceeds the bandwidth limit and the buffer is full, data packets may be discarded according to a certain rule.

As an example, the congestion avoidance 223 may adopt a WRED (Weighted Random Early Detection) algorithm. The WRED algorithm may randomly and actively discard low priority packets in advance when the network traffic approaches a bottleneck, thereby avoiding the occurrence of congestion. The WRED may perform traffic scheduling according to the following parameters and rules: (1) MinThreshold: when the queue length exceeds this value, low priority data packets are discarded; (2) MaxThreshold: when the queue length reaches this value, all data packets are discarded; (3) DropProbability: it represents the probability of random discard when the queue length is between the minimum and maximum thresholds. Generally, a high priority traffic is configured with a lower discard probability, while a low priority traffic is configured with a higher discard probability.

Alternatively, the congestion avoidance algorithm may also adopt one of following algorithms:
- RED (Random Early Detection), which reduces the risk of congestion by probabilistically dropping packets.
- ECN (Explicit Congestion Notification), which notifies devices to slow down the process instead of dropping packets.
- AQM (Active congestion management)-Active congestion management, which adjusts the queue in advance to avoid congestion.

As an example, the congestion management 224 may adopt CBWFQ (Class-Based Weighted Fair Queuing). The CBWFQ may classify the incoming traffic into three queues, each of which corresponds to a traffic with a different QoS requirement: (1) EF queue (Low-latency queue), which is a high priority queue used for latency-sensitive services such as VoIP, ensuring low latency and minimum latency jitters; (2) AF queue (Bandwidth-guaranteed queue), which guarantees the bandwidth of various types of traffic; and (3) BE queue (Default queue), which processes the remaining traffic.

Further, each queue may be separately configured with a bandwidth percentage, a queue length, and a discard strategy. For example, the AF queue adopts fair scheduling to dynamically utilize excess idle bandwidth, and also adopts a discard strategy such as tail-drop strategy or WRED discard strategy if congestion occurs. In addition, the BE queue utilizes WFQ (Weighted Fair Queueing) scheduling to fairly allocate the remaining bandwidth, and also adopts a discard strategy such as tail-drop strategy or WRED discard strategy if a congestion occurs.

Alternatively, the resource scheduling for theses queues may also follow the rules as below:
- WFQ (Weighted Fair Queueing), which allocates bandwidth according to weights.
- FIFO (First-In, First-Out), which performs first-in, first-out queue scheduling.
- PQ (Priority Queueing), which gives priority to high priority traffic.
- DRR (Deficit Round Robin), which is a weighted round-robin queue scheduling.
- CoDel (Controlled Delay), which is a queue management algorithm based on delay optimization.
- SFQ (Stochastic Fair Queueing), which is a stochastic fair queue algorithm that ensures traffic fairness.

It shall be noted that, the above QoS policies 221-224 shown in Fig.2 are merely for explanation and illustration, but do not imply any limitation. According to various applications, any of the above QoS policies may be omitted, and the operation sequence may also be exchanged.

It can be seen that, the conventional QoS-based resource scheduling process 200 is only performed at the gateway node. In other words, it is limited to optimizing QoS strategies performed at a single node (such as the gateway node 110 of Fig.1), without considering the collaborative optimization by multiple nodes in the Mesh network. This limitation restricts the overall performance of the network.

In view of this, embodiments of the present disclosure propose an improved QoS-based resource scheduling method, in which the traffic priority information obtained by the gateway node is shared or synchronized to one or more of the agent nodes, preferably to all of the agent nodes. As such, the nodes in the mesh network have a consistent understanding of the traffic priority. Consequently, the gateway node and the agents may perform resource scheduling collaboratively based on this consistent traffic priority information to ensure the required quality of service.

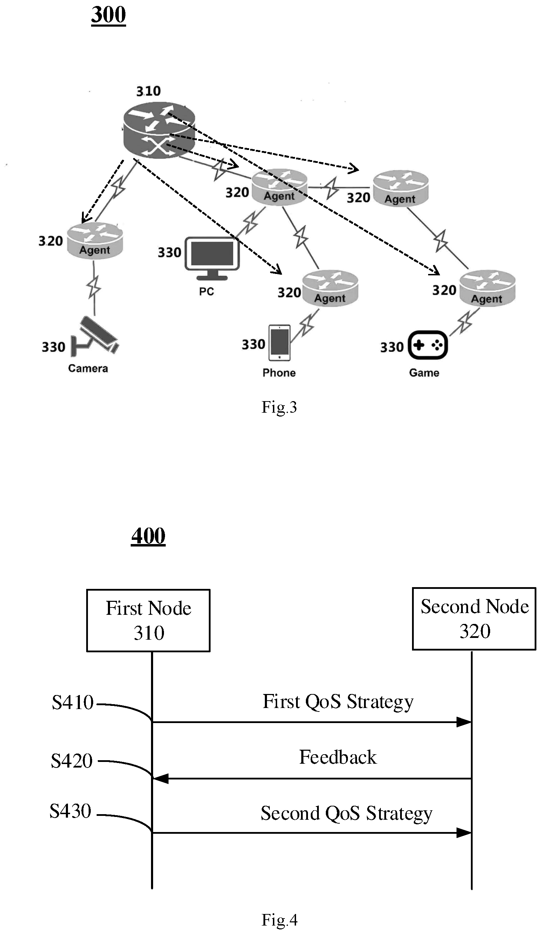

Fig. 3 shows an exemplary application scenario with an architecture of a Mesh network 300 according to an embodiment of the present disclosure.

As shown in Fig. 3, the architecture of the Mesh network 300 is similar to that of the Mesh network 100. The Mesh network 300 may include at least one first node 310 such as the gateway node 310, multiple second nodes 320 such as the agent nodes 320 and various terminal devices 330. These nodes and devices 310-330 may be connected with each other in a wireless or wired manner. Furthermore, the first node 310 may be configured with a centralized controller. For example, the controller may be implemented via hardware in combination with software.

As shown by the dotted lines in Fig. 3, in embodiments of the present disclosure, the traffic priority information obtained by the gateway node can be provided to at least one agent nodes. This enables the at least one agent nodes to perform QoS-based resource scheduling based on the traffic priority information. As such, these nodes in the Mesh network have a consistent understanding of the traffic priority, thus the gateway node and some agent nodes can perform collaborative resource scheduling based on this consistent understanding to ensure the required quality of service.

As an example, the traffic priority information obtained by the gateway node may be provided to all agent nodes. This enables the all nodes to perform QoS-based resource scheduling based on the consistent traffic priority information, thereby ensuring the required quality of service

In the following, various approaches of providing the traffic priority information from the gateway node to an agent node will be described in detail.

In an example, the traffic priority information may be provided via a traffic priority field in every packet of the traffic. For example, the traffic priority field may be set in a header of the packet. When receiving packets with the traffic priority field, the agent node may extract the traffic priority information for the packet, and then decide the forwarding the packet based on the extracted traffic priority information.

As an example, the traffic priority field may utilize various existing or new fields, such as a Differentiated Services Code Point (DSCP) field, a Virtual Local Area Network (VLAN) tag field, a reserved field in TCP/IP message, or a custom protocol field in an application layer message.

The DSCP field is located within a Type of Service (ToS) byte field of a IP packet header, which is applicable to IP packets. The ToS field in the IP packet header may consist of 8 bits, which can represent packets with different priority levels. For example, the highest 3 bits represent the IP priority, with a value range of 0 to 7. RFC2474 redefines the ToS field in the IP packet header, and renames the ToS field as a DS field. The priority uses the first 6 bits of this field, with a value range of 0 to 63, and the last 2 bits are reserved bits. Thus, the reserved bits in DSCP field can also be used to carry the traffic priority information.

The VLAN tag field is a 4-byte field added to Ethernet frames, which are used to segment traffic into different virtual local area networks. 802.1P is an extended protocol of the 802.1Q VLAN standard. The Tag field consists of PRI, CFI, and VLAN ID. In fact, the PRI field is not defined or used in the 802.1Q VLAN standard, and it is supplemented and defined by 802.1P. 802.1P defines the highest 3 bits of the 802.1Q Tag as the User Priority, with a value range of 0 - 7, which is used to determine the priority of the data frame. Thus, the last bit of VLAN tag field can be used to carry the traffic priority information.

Moreover, some fields reserved in TCP/IP protocols can be utilized to store the traffic priority information.

Additionally, some custom protocol fields used for an application layer can be designed to include the traffic priority information.

The above fields are all available for carrying the traffic priority information separately or jointly. By adding specific values or patterns within these fields, the network nodes can transfer the priority level of the traffic.

In another example embodiment, the traffic priority information may be provided by storing the traffic priority information in a database which is accessible by the second node. For example, the database may be configured in a distributed or centralized manner. Thus, each second node in the Mesh network can access the database in real-time to retrieve the up-to-date traffic priority information. This ensures that the traffic can be scheduled based on the consistent traffic priority information, even in a large-scale network with a large number of nodes.

In another example, the traffic priority information may be provided in a broadcast or multicast manner so that some or all the agent nodes can receive the traffic priority information simultaneously. For example, the traffic priority information may be directly transmit to the agent nodes. Furthermore, each of the agent nodes may maintain a local cache, such as a lookup table, to store the traffic priority information after receiving it. This ensures that the nodes always have access to the up-to-date traffic priority information, enabling them to schedule traffic based on the consistent traffic priority information.

In some embodiments, the Mesh network may include multiple regions, and each of these regions includes at least one gateway node and multiple agent nodes. Within a region, the traffic priority information can be provided from the gateway node to the agent nodes. Additionally, among different regions, the traffic priority information can be provided from a gateway node in a region to another gateway node in another region, and then forwarded to agent nodes in the other region via the gateway node in the other region.

In accordance to some embodiments of the present disclosure, the first node and the second nodes may both cooperatively perform QoS-based resource scheduling based on the consistent traffic priority information shared by the first node. Therefore, the mesh network provides an improved QoS guarantee, such that traffic within the entire network is optimally scheduled and resources of the overall network are more reasonably utilized. For example, high priority traffic (such as voice and video) is given priority and guaranteed, while low priority traffic (such as ordinary data transmission) is allocated reasonable bandwidth according to current traffic requirement and resource usage.

Fig. 4 shows an exemplary process 400 of determining QoS strategy for a second node 320 in a Mesh network according to an embodiment of the present disclosure.

As shown in Fig. 4, according to an embodiment, the QoS strategy to be used by the second node 320 may be determined through the interaction between the first node 310 and the second node 320. The factors to be considered in the determination may include current traffic requirement and topology condition in the Mesh network, and a capability of the second node 320 for implementing various QoS policies.

The first node 310 may determine a first QoS strategy including one or more QoS policies and their respective configurations to be suggested for the second node 320. For example, the one or more QoS policies and their respective configurations may be selected by the first node 310 based on current traffic requirement and topology condition. For example, the first QoS strategy may be the same as or similar to the QoS strategy used by the gateway node itself.

The one or more QoS policies may be one or more of traffic monitoring, traffic reshaping, congestion avoidance, or congestion management, as described above in the description in combination with Fig.2. The configuration of a QoS policy may include a scheduling algorithm and a corresponding parameter set.

For example, the first QoS strategy may include a traffic monitoring policy and its corresponding configuration. Specifically, a CAR algorithm is selected to perform traffic monitoring. Moreover, the corresponding parameters are set as follows: "CIR" is set to be "10Mbps", "CBS" is set to be "1MB", "EBS" is set to be "500KB". Besides, the priority handling approach is set as "drop". The specific configuration is shown in Table 1.

**Table 1**

| |
|---|
| ``` { ``` |
| ``` "qos_monitor_policy": "CAR", "parameters": { "CIR": "10Mbps", "CBS": "1MB", "EBS": "500KB", "priority_handling": "drop" } } ``` |

In an example, the first QoS strategy may include a traffic reshaping policy and its corresponding configuration. Specifically, a GTS algorithm is selected to perform traffic reshaping. The corresponding parameter is set as follows: "Bandwidth" is set to be "10Mbps", "Buffer Size" is set to be "100KB", "Latency" is set to be "50ms". The specific configuration is shown in Table 2.

**Table 2**

| |
|---|
| ``` { "qos_reshape_policy": "GTS", "parameters": { "bandwidth": "10Mbps", "buffer_size": "100KB", "latency": "50ms" } } ``` |

In an example, the first QoS strategy may include a congestion avoidance policy and its corresponding configuration. Specifically, a WRED algorithm is selected to perform congestion avoidance. Moreover, the corresponding parameter is set as follows: "MinThreshold" is set to be "40", "MaxThreshold" is set to be "100", and "DropProbability" is set to be "0.05-0.5" for low priority traffic and "0.01-0.2" for high priority traffic. The specific configuration is shown in Table 3.

**Table 3**

| |
|---|
| ``` { "congestion_avoidance": "WRED", ``` |
| ``` "parameters": { "min_threshold": 40, "max_threshold": 100, "drop_probability": { "low_priority": { "min": 0.05, "max": 0.5 }, "high_priority": { "min": 0.01, "max": 0.2 } } } } ``` |

In an example, the first QoS strategy may include a congestion management policy and corresponding configuration. Specifically, a CBWFQ algorithm is selected to perform congestion management. The corresponding parameter is set as follows: for EF queue, "Bandwidth percentage" is set as 20, "Queue length" is default, and "discard_strategy" is set as "tail_drop". For AF queue, it includes two class AF1- AF2, for AF1, "Bandwidth percentage" is set as 40, "Queue length" is 64, and "discard_strategy" is set as "WRED"; for AF2, "Bandwidth percentage" is set as 30, "Queue length" is 32, and "discard_strategy" is set as "tail_drop"; for BE queue, "Bandwidth percentage" is set as 10, "Queue length" is 16, and "discard_strategy" is set as "WRED". The specific configuration is shown in Table 4.

**Table 4**

| |
|---|
| ``` { "queue_management": "CBWFQ", "parameters": { "EF_queue": { "bandwidth_percentage": 20, "queue_length": , "discard_strategy": "tail_drop" }, "AF_queues": [ { "class": "AF1", ``` |
| ``` "bandwidth_percentage": 40, "queue_length": 64, "discard_strategy": "WRED" }, { "class": "AF2", "bandwidth_percentage": 30, "queue_length": 32, "discard_strategy": "tail_drop" } ], "BE_queue": { "bandwidth_percentage": 10, "queue_length": 16, "discard_strategy": "WRED" } ``` |

At Step 410, the first node 310 may transmit the first QoS strategy to the second node 320.

Upon receiving the first QoS strategy, the second node 320 may determine its capability for supporting each one QoS policy in the first QoS strategy. There may be three cases as below: (1) the second node 320 is able to support the one QoS policy with its received configuration for the one QoS policy; (2) the second node 320 is able to support the one QoS policy with a range of configurations, but its received configuration is not within a range of configurations; and (3) the second node is unable to support the one QoS policy. In all cases, the second node 320 may provide an indication on whether the second node 320 supports the one QoS policy and its received configuration. Further, in the case of (2), the second node 320 may further provide a range of supported configurations for the one QoS policy. For example, the range of supported configurations for the one QoS policy may include degraded configurations, such as one or more simplified scheduling algorithms, or decreased parameters.

For example, for a traffic monitoring policy, according to the configuration as shown in above Table 1, a CAR algorithm is configured. The second node 320 may firstly verify whether it is able to support the CAR algorithm. In the case of supporting the CAR algorithm, the second node 320 may further verify whether it is able to support the corresponding parameter set. For example, if the second node 320 is unable to support CIR of 10Mbps, it will provide a supportable parameter range, such as CIR of up to 5Mbps.

For example, for a traffic reshaping policy, according to the configuration as shown in above Table 2, a GTS algorithm is configured, and the parameter "Bandwidth" is set to be "10Mbps". The second node 320 is able to support the GTS algorithm, but it at most supports Bandwidth of 5Mbps. In this case, its capability for traffic reshaping policy may include a supportable parameter set, such as Bandwidth of up to 5Mbps.

For example, for a congestion avoidance policy, according to the configuration as shown in above Table 3, a WRED algorithm is configured. The second node 320 may firstly verify whether it is able to support the WRED algorithm. In the case of supporting the WRED algorithm, the second node 320 may further verify whether it is able to support the corresponding parameter set. For example, if the second node 320 is unable to support a "MaxThreshold" of 100, it will provide a supportable parameter set, such as "MaxThreshold" of 80.

For example, for a congestion management policy, according to the configuration as shown in above Table 4, a CBWFQ algorithm is configured. The second node 320 may firstly verify whether it is able to support the CBWFQ algorithm. In the case of supporting the CBWFQ algorithm, the second node 320 may further verify whether it is able to support the corresponding parameter set. For example, if the second node 320 is unable to support a discard strategy of "WRED", it will provide a supportable parameter set, such as a discard strategy of "tail_drop".

Then, at Step 420, the second node 320 may transmit to the first node 310, feedback information on its capability for implementing each one QoS policy. The feedback information indicates whether the second node 320 supports each QoS policy included in the first QoS strategy with its received configuration. Further, in the above case of (2), if the second node supports the one QoS policy but not supports the received configuration of the one QoS policy, the feedback information may further indicate a range of configurations supported by the second node for the one QoS policy. For example, the range of configurations for the one QoS policy may include degraded configurations.

Based on the feedback information, the first node 310 may determine a second QoS strategy to be used by the second node 320. For each one QoS policy included in the first QoS strategy, in response to the feedback information indicating that the second node 320 supports the one QoS policy with its received configuration, the second QoS strategy may include the one QoS policy and its received configuration. Further, in response to the feedback information indicating that the second node 320 supports the one QoS policy with a range of configurations different from its received configuration and including information indicating the range of configurations for the one QoS policy, the second QoS strategy may include the one QoS policy and an adjusted configuration determined by the first node in the range of configurations or does not include the one QoS policy. For example, if implementing the one QoS policy with a configuration in the range of configurations is helpful for improving the traffic scheduling performance, the first node may determine an adjusted configuration therefrom, and include the one QoS policy and the adjusted configuration in the second QoS strategy. Otherwise, if implementing the one QoS policy with any configuration in the range of configurations is not helpful for improving the traffic scheduling performance, the second QoS strategy does not include the one QoS policy. Further, in response to the feedback information indicating that the second node 320 does not support the one QoS policy, the second QoS strategy does not include the one QoS policy.

For example, for a traffic monitoring policy, as stated above, the second node 320 supports the configured CAR algorithm but only supports a degraded parameter threshold "CIR of 5Mbps" instead of "CIR of 10Mbps", and thus it provides a supportable parameter set "CIR of 5Mbps" in the feedback information. In this case, the first node 310 decides whether the second node 320 performing CAR algorithm with a degraded parameter "CIR of 5Mbps" can improve traffic scheduling, for example based on the current traffic requirement and topology condition. If so, the first node 310 determines an adjusted configuration based on the supportable parameter set provided by the feedback information, and includes the traffic monitoring policy and the adjusted configuration into the second strategy. Otherwise, the traffic monitoring policy and respective configuration are not included in the second strategy.

For example, for a traffic reshaping policy, as stated above, the second node 320 supports the configured GTS algorithm but only supports a degraded parameter threshold "Bandwidth of 5Mbps" instead of the configured "Bandwidth of 10Mbps", and it provides a supportable parameter set "Bandwidth of 5Mbps" in the feedback information. In this case, the first node 310 decides whether the second node 320 performing GTS algorithm with a degraded parameter configuration "Bandwidth of 5Mbps" can improve traffic scheduling, for example based on the current traffic requirement and topology condition. If so, the first node 310 determines an adjusted configuration based on the supportable parameter set provided by the feedback information, and includes the traffic reshaping policy and the adjusted configuration into the second strategy. Otherwise, the traffic reshaping policy and respective configuration are not included in the second strategy.

For example, for a congestion avoidance policy, as stated above, the second node 320 supports the configured WRED algorithm but only supports a degraded parameter threshold "MaxThreshold of 80" instead of the configured "MaxThreshold of 100", and provides a supportable parameter set "MaxThreshold of 80" in the feedback information. The first node 310 decides whether the second node 320 performing WRED algorithm with a degraded parameter configuration "MaxThreshold of 80" can improve traffic scheduling, for example based on the current traffic requirement and topology condition. If so, the first node 310 determines an adjusted configuration based on the supportable parameter set provided by the feedback information, and includes the congestion avoidance policy and the adjusted configuration into the second strategy. Otherwise, the congestion avoidance policy and respective configuration are not included in the second strategy.

For example, for a congestion management policy, as stated above, the second node 320 supports the configured CBWFQ algorithm but only supports a discard strategy of "tail_drop" instead of the configured discard strategy of "WRED", and provides a supportable discard strategy of "tail_drop" in the feedback information. The first node 310 decides whether performing CBWFQ algorithm with a different discard strategy of "tail_drop" can improve traffic scheduling, for example based on the current traffic requirement and topology condition. If so, the first node 310 determines an adjusted configuration based on the supportable configuration from the second node, and includes the congestion management policy and the adjusted configuration into the second strategy. Otherwise, the congestion management policy and respective configuration are not included in the second strategy.

At Step 430, the first node 310 may transmit the second QoS strategy to the second node 320, enabling the second node 320 to perform QoS-based resource scheduling with the second QoS strategy.

As an example, based on the received QoS strategy, the second node 320 configures one or more QoS policies and their respective configurations, such as specific algorithms and parameters, in order to perform QoS-based resource scheduling with these specific policies and configurations.

As another example, if the second QoS strategy does not include any of the one or more QoS policies included in the first QoS strategy, the first node 310 may determine the second QoS strategy to include a basic scheduling rule, and the second node 320 may apply the basic scheduling rule to perform a simple resource scheduling based on the traffic priority information. For example, the basic scheduling may be as follows rule: for packets with different traffic priority level, the packets with higher priority levels may be forwarded firstly; for packets with the same traffic priority level, the scheduling follows a FIFO (First in Frist out) rule. Furthermore, in this case, since the second node 320 merely provides a basic QoS guarantee, the first node 310 may choose not to schedule high priority traffic to be routed to the second node 320.

In contrast, if the second QoS strategy is the same as the first QoS strategy, the second nodes can fully support the QoS policies from the first node and provides an improved QoS guarantee.

Through the process 400, the first node 310 determines a QoS strategy for the second nodes, which is as similar as possible to that of the first node itself. This allows the second node to cooperatively perform QoS-based resource scheduling with the first node by using the same or similar QoS strategy.

The process 400 may be performed between the first node and all second nodes in the Mesh network. Accordingly, all nodes in the entire Mesh network may collaboratively perform QoS-based resource scheduling with similar QoS strategies.

It shall be noted that, the first strategy or the second strategy may not be static. Instead, these strategies can be dynamically adjusted according to change in traffic requirement and network topology. If necessary, the above process 400 may be performed dynamically. For example, when a new second node joins the network, the first node 310 may initiate the process 400 to determine a suitable QoS strategy for the new second node. For another example, when the QoS strategy used by the first node is changed, it may restart the process 400 to determine new QoS strategies to be used by the second nodes, in which the new QoS strategies are adjusted accordingly based on the changed QoS strategy used by the first node.

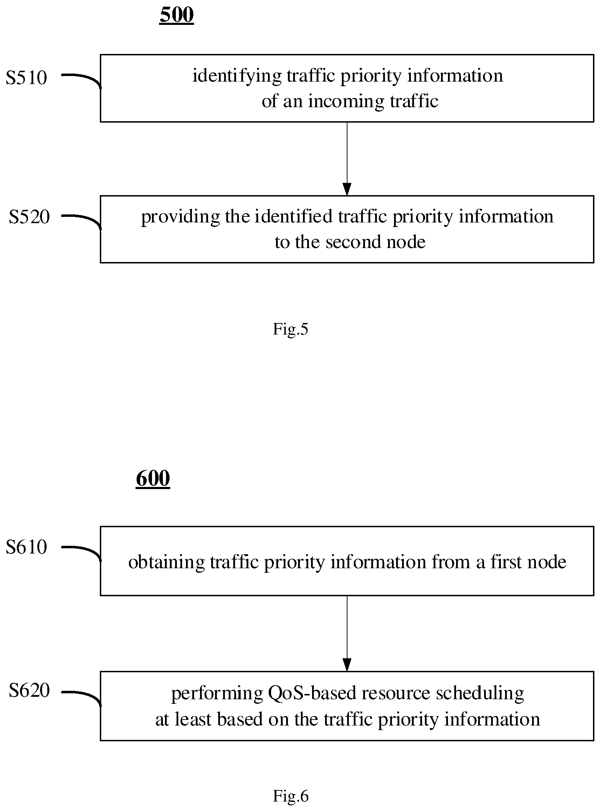

Fig. 5 shows a flowchart of a QoS-based resource scheduling method 500 implemented at a first node in a Mesh network according to an embodiment of the present disclosure. Unlike the conventional QoS-based resource scheduling, the first node such as the gateway node shares its identified traffic priority information with some or all of the agent nodes in the Mesh network, such that these second nodes are also able to perform QoS-based resource scheduling based on the consistent traffic priority information, thereby improving the QoS guarantee.

The detailed description of method 500 can refer to the content described above with respect to Figs. 3-4. For example, the method 500 can be executed in the architecture described with respect to Fig. 3 and according to the interactions between a first node (such as a gateway node, one or more second nodes such as the agent nodes as described with respect to Fig. 4. In addition, each step of method 500 can be performed by one or more processing units, such as a central processing unit (CPU) of the gateway device.

With reference to Fig. 5, the method 500 comprises steps S510-S520.

At step S510, the first node may identify traffic priority information of an incoming traffic to the Mesh network, wherein the traffic priority information comprises a traffic priority level of the incoming traffic.

At step S520, the first device may provide the identified traffic priority information to a second node in the Mesh network, such that the second node is able to perform QoS-based resource scheduling at least based on the traffic priority information from the first node.

In an exemplary embodiment, the traffic priority information may be provided to nodes forwarding the incoming traffic in the Mesh network. In this way, these nodes participating in the traffic forwarding are able to collaboratively perform QoS-based resource scheduling based on this consistent traffic priority information, thereby improving the quality of service.

In an exemplary embodiment, the traffic priority information may be provided to all nodes other than the first node in the Mesh network. The all nodes other than the first node include the second node. Accordingly, all nodes in the entire Mesh network may collaboratively perform QoS-based resource scheduling based on this consistent traffic priority information, thereby further improving the quality of service.

In an exemplary embodiment, the first node may provide the traffic priority information via a traffic priority field, which is set in every packet of the traffic.

In a further exemplary embodiment, the traffic priority field may be one of a Differentiated Services Code Point (DSCP) field, a Virtual Local Area Network (VLAN) tag field, a reserved field in a TCP/IP message, or a field in an application layer message.

In another exemplary embodiment, the first node may provide the traffic priority information by storing the traffic priority information in a database which is accessible by the second node.

In another exemplary embodiment, the first node may provide the traffic priority information to the second node in a broadcast, multicast or unicast manner. For example, when the traffic priority information is provided to all other nodes in the Mesh network, the traffic priority information may be provided in the broadcast or multicast manner, to improve the transmission efficiency of priority information. For another example, when the traffic priority information is only provided to nodes forwarding the traffic in the Mesh network, the traffic priority information may be provided in the unicast manner, to only delivery the traffic priority information to relevant nodes.

In another exemplary embodiment, the Mesh network may include multiple regions, the first node and the second node are within one of the multiple regions, and a third node and a fourth node are within another region of the multiple regions. The first node may providee the traffic priority information to the third node, and provide the traffic priority information to the fourth node via the third node.

In another exemplary embodiment, the first device may identify the traffic priority information by following steps: determining a traffic type of the incoming traffic based on at least one of content, a source address, a destination address, a protocol type, or application layer information of the incoming traffic; and determining the traffic priority level based on the determined traffic type.

In another exemplary embodiment, the first node may further preform steps of transmitting, to the second node, a first QoS strategy including one or more QoS policies and their respective configurations; receiving, from the second node, feedback information on a capability of the second node for supporting the one or more QoS policies with their respective configurations; determining a second QoS strategy to be used by the second node based on the feedback information; and transmitting the second QoS strategy to the second node, such that the second node is able to perform QoS-based resource scheduling with the second QoS strategy

In a further exemplary embodiment, for each one QoS policy of the one or more QoS policies included in the first QoS strategy, in response to the feedback information indicating that the second node has a capability of supporting the one QoS policy with its received configuration, the second QoS strategy includes the one QoS policy and its received configuration. Further, in response to the feedback information indicating that the second node has a capability of supporting the one QoS with a range of configurations different from its received configuration and including information indicating the range of configurations for the one QoS policy, the second QoS strategy includes the one QoS policy and an adjusted configuration determined by the first node in the range of configurations or does not include the one QoS policy. Further, in response to the feedback information indicating that the second node does not have a capability of supporting the one QoS policy, the second QoS strategy does not include the one QoS policy.

In another exemplary embodiment, the first node may determine a QoS strategy including one or more QoS policies to be used by the second node, based on information on capabilities of QoS policy supporting of part or all nodes in the Mesh network, which is collected by the first node from the part or all nodes in the Mesh network. As an example, the QoS strategy may be based on capabilities of QoS policy supporting of all nodes in the Mesh network, so that the QoS strategy for each node can determined more effectively based on global capability information concerning the all the nodes. As another example, the QoS strategy may be based on capabilities of QoS policy supporting of part nodes in the Mesh network. For example, the part nodes may be the nodes managed by the same first node (such as the same gateway node) managing the second node.

Further, the first node may transmit the determined QoS strategy to the second node, such that the second node is able to perform QoS-based resource scheduling with the determined QoS strategy. As a result, the QoS strategy for the second node can be determined in consideration of comprehensive information on capabilities of part or all nodes in the Mesh network, resulting in a more effective QoS strategy for the second node.

Similarly, the first node may determine a corresponding QoS strategy for each node, based on information on capabilities of QoS policy supporting of part or all nodes in the Mesh network, which is collected by the first node from the part or all nodes in the Mesh network, and transmit the corresponding QoS strategy to each node, such that each node is able to perform QoS-based resource scheduling with the corresponding QoS strategy. In this case, the corresponding QoS strategy for each node can be determined in consideration of comprehensive information on capabilities of part or all nodes in the Mesh network, resulting in a more effective QoS strategy for each node.

In a further example, the information on capabilities of QoS policy supporting may be updated periodically and/or when a new node joins the Mesh network. For example, if the second node detects that a new node joins the Mesh network, the second node may collect information on capability of the new node from the new node. For another example, the second node may periodically collect information on capabilities of part or all nodes in the Mesh network from these nodes. In this way, the QoS strategies used by the nodes are dynamically updated in accordance with the updated information on capabilities of QoS policy supporting of the part or all nodes in the Mesh network, resulting in dynamic updated and more adaptive QoS strategies.

In another further exemplary embodiment, the one or more QoS policies may one or more of traffic monitoring, traffic reshaping, congestion avoidance, or congestion management.

In another further exemplary embodiment, in response to the second QoS strategy including none of the one or more QoS policies, the first node does not schedule the incoming traffic to be routed to the second node when the incoming traffic has a priority level higher than a threshold.

In another exemplary embodiment, the first node may be a gateway node, and the second node may be an agent node.

Fig. 6 shows a flowchart of a method 600 for QoS-based resource scheduling in a Mesh network implemented at a second node according to an embodiment of the present disclosure. Unlike the conventional QoS-based resource scheduling, the agent nodes also perform QoS-based resource scheduling based on the consistent traffic priority information, thereby improving the QoS guarantee.

The detailed description of method 600 can refer to the content described above with respect to Figs. 3-4. For example, the method 600 can be executed in the architecture described with respect to Fig. 3 and according to the interactions between a first node (such as a gateway node), one or more second nodes (such as the agent nodes) as described with respect to Fig. 4. In addition, each step of method 600 can be performed by one or more processing units, such as a central processing unit (CPU) of the agent device.

With reference to Fig. 6, the method 600 comprises steps S610-S620.

At step S610, the second node may obtain traffic priority information from a first node in the Mesh network, wherein the traffic priority information comprises a traffic priority level of the incoming traffic.

At step S620, the second node may perform QoS-based resource scheduling at least based on the traffic priority information.

In an exemplary embodiment, the second node may obtain the traffic priority information via a traffic priority field in every packet of the traffic.

In a further exemplary embodiment, the traffic priority field may be one of a Differentiated Services Code Point (DSCP) field, a Virtual Local Area Network (VLAN) tag field, a reserved field in a TCP/IP message, or a field in an application layer message.

In another exemplary embodiment, the second node may obtain the traffic priority information by accessing a database storing traffic priority information from the first node.

In another exemplary embodiment, the second node may obtain the traffic priority information from the first node in a broadcast or multicast manner.

In another exemplary embodiment, the second node may further perform following operations: receiving, from the first node, a first QoS strategy including one or more QoS policies and their respective configurations; determining a capability of the second node for supporting the one or more QoS policies with their respective configurations; transmitting, to the first node, feedback information on the capability of the second node; receiving, from the first node, a second QoS strategy, which is determined by the first node and based on the capability of the second node; and performing QoS-based resource scheduling with the determined QoS strategy.

In another further exemplary embodiment, for each one QoS policy of the one or more QoS policies included in the first QoS strategy, the feedback information indicates whether the second node has a capability of supporting the one QoS policy with its received configuration. Further, in response to the second node having a capability of supporting the one QoS policy but not supporting the received configuration of the one QoS policy, the feedback information further indicates a range of configurations supported by the second node for the one QoS policy.

In another further exemplary embodiment, the one or more QoS policies may one or more of traffic monitoring, traffic reshaping, congestion avoidance, or congestion management.

In another exemplary embodiment, the second node may perform QoS-based resource scheduling at least based on a topology condition of the Mesh network, wherein the topology condition includes at least one of link quality, neighbor node load, and available channel resources.

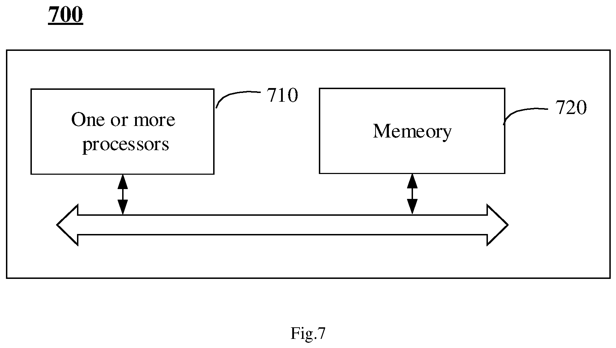

Fig. 7 is an exemplary block diagram illustrating a device 700 in accordance with some embodiments of the present disclosure.

It should be noted that the computing device depicted in Fig. 7 can correspond to the first node or the second node as described in Figs. 3-6, and can be used to perform the actions involved in the roaming mechanism, for example, the methods 500 and 600 as described above.

As shown in Fig. 7, the device 700 can comprise processor 710 and memory 720. The processor 710 is communicatively coupled with the memory and configured to perform the methods discussed above.

Examples of the processor 710 comprise microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

The processor 710 can execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on memory 720.

The memory 720 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The memory 720 may reside in the processor 710, external to the processor 710, or distributed across multiple entities including the processor 710. The memory 720 may be embodied in a computer program product. By way of example, a computer program product may include a computer-readable medium in packaging materials. Those skilled in the art will recognize how to implement the described functionality presented throughout this disclosure depending on the particular application and the overall design constraints imposed on the overall system.

In addition, according to another embodiment of the present disclosure, a computer program product for wireless communication is disclosed. As an example, the computer program product comprises a non-transitory computer readable storage medium having program instructions embodied therewith, and the program instructions are executable by a processor. When executed, the program instructions cause the processor to perform one or more of the above-described procedures, and details are omitted herein for conciseness.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

Reference to an element in the singular is not intended to mean "one and only one" unless specifically so stated, but rather "one or more." Similarly, reference to an element in the plural is not intended to mean "more than one" unless specifically so stated or being contradictory with the description elsewhere, but rather "one or more." Terms such as "if," "when," and "while" should be interpreted to mean "under the condition that" rather than implying an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C.

It should be noted that the flowcharts and block diagrams in the attached drawings illustrate the possible architectures, functions and operations of the methods and apparatuses according to various embodiments of the present application. In this regard, each block in the flowchart or block diagram may represent a module, a program segment, or a part of code, which contains at least one executable instruction for implementing a specified logical function. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, may be implemented by a dedicated hardware-based system that performs specified functions or operations, or by a combination of dedicated hardware and computer instructions.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A Quality of Service (QoS)-based resource scheduling method for a first node in a Mesh network, comprising:
identifying traffic priority information of an incoming traffic to the Mesh network, wherein the traffic priority information comprises a traffic priority level of the incoming traffic; and
providing the identified traffic priority information to a second node in the Mesh network, such that the second node is able to perform QoS-based resource scheduling at least based on the traffic priority information from the first node.

2. The method according to claim 1, wherein
the traffic priority information is provided to nodes forwarding the incoming traffic in the Mesh network, or
the traffic priority information is provided to all nodes other than the first node in the Mesh network.

3. The method according to claim 1, wherein
the traffic priority information is provided via a traffic priority field in every packet of the incoming traffic, or
the traffic priority information is provided by storing the traffic priority information in a database which is accessible by the second node,
wherein the traffic priority information is provided to the second node in a broadcast, multicast or unicast manner.

4. The method according to claim 1, wherein the Mesh network includes multiple regions, the first node and the second node are within one of the multiple regions, and a third node and a fourth node are within another region of the multiple regions; and
the method further comprises:
providing the traffic priority information to the third node, and
providing the traffic priority information to the fourth node via the third node.

5. The method according to claim 1, wherein identifying the traffic priority information comprising:
determining a traffic type of the incoming traffic based on at least one of content, a source address, a destination address, a protocol type, or application layer information of the incoming traffic; and
determining the traffic priority level based on the determined traffic type.

6. The method according to claim 1, further comprising:
transmitting, to the second node, a first QoS strategy including one or more QoS policies and their respective configurations;
receiving, from the second node, feedback information on a capability of the second node for supporting the one or more QoS policies with their respective configurations;
determining a second QoS strategy to be used by the second node based on the feedback information; and
transmitting the second QoS strategy to the second node, such that the second node is able to perform QoS-based resource scheduling with the second QoS strategy.

7. The method according to claim 6, wherein for each one QoS policy of the one or more QoS policies included in the first QoS strategy,
in response to the feedback information indicating that the second node has a capability of supporting the one QoS policy with its received configuration, the second QoS strategy includes the one QoS policy and its received configuration;
in response to the feedback information indicating that the second node has a capability of supporting the one QoS with a range of configurations different from its received configuration and including information indicating the range of configurations for the one QoS policy, the second QoS strategy includes the one QoS policy and an adjusted configuration determined by the first node in the range of configurations or does not include the one QoS policy; and
in response to the feedback information indicating that the second node does not have a capability of supporting the one QoS policy, the second QoS strategy does not include the one QoS policy.

8. The method according to claim 1, further comprising:
determining a QoS strategy including one or more QoS policies to be used by the second node based on information on capabilities of QoS policy supporting of part or all nodes in the Mesh network, which is collected by the first node from the part or all nodes in the Mesh network; and
transmitting the determined QoS strategy to the second node, such that the second node is able to perform QoS-based resource scheduling with the determined QoS strategy.

9. The method according to claim 8, wherein the information on capabilities of QoS policy supporting is updated periodically and/or when a new node joins the Mesh network.

10. The method according to claim 1, wherein the first node is a gateway node, and the second node is an agent node.

11. A QoS-based resource scheduling method for a second node in a Mesh network, comprising:
obtaining traffic priority information of an incoming traffic to the Mesh network from a first node in the Mesh network, wherein the traffic priority information comprises a traffic priority level of the incoming traffic; and
performing QoS-based resource scheduling at least based on the traffic priority information.

12. The method according to claim 11, wherein
the traffic priority information is obtained via a traffic priority field in every packet of the incoming traffic, or
the traffic priority information is obtained by accessing a database with the traffic priority information stored by the first node
wherein the traffic priority information is obtained from the first node in a broadcast, multicast or unicast manner.

13. The method according to claim 11, further comprising:
receiving, from the first node, a first QoS strategy including one or more QoS policies and their respective configurations;
transmitting, to the first node, feedback information on a capability of the second node for supporting the one or more QoS policies with their respective configurations;
receiving, from the first node, a second QoS strategy determined by the first node based on the capability of the second node; and
performing QoS-based resource scheduling with the determined QoS strategy,
wherein for each one QoS policy of the one or more QoS policies included in the first QoS strategy,
the feedback information indicates whether the second node has a capability of supporting the one QoS policy with its received configuration, and
in response to the second node having a capability of supporting the one QoS policy but not supporting the received configuration of the one QoS policy, the feedback information further indicates a range of configurations supported by the second node for the one QoS policy.

14. A first node in Mesh network, comprising:
one or more processors;
a memory coupled to at least one of the processors; and
a set of computer program instructions stored in the memory, when executed by at least one of the processors, cause the first node to perform operations of:
identifying traffic priority information of an incoming traffic to the Mesh network, wherein the traffic priority information comprises a traffic priority level of the incoming traffic; and
providing the identified traffic priority information to a second node in the Mesh network, such that the second node is able to perform QoS-based resource scheduling at least based on the traffic priority information from the first node.

15. A second node in Mesh network, comprising:
one or more processors;
a memory coupled to at least one of the processors; and
a set of computer program instructions stored in the memory, when executed by at least one of the processors, cause the first node to perform operations of:
obtaining traffic priority information of an incoming traffic to the Mesh network from a first node in the Mesh network, wherein the traffic priority information comprises a traffic priority level of the incoming traffic; and
performing QoS-based resource scheduling at least based on the traffic priority information.
